# FASCICULE DE BREVET EUROPEEN

(11) **EP 4 015 423 B1**
(45) Date de publication et mention de la délivrance du brevet: **06.09.2023**
(21) Numéro de dépôt: 21214865.4
(22) Date de dépôt: 15.12.2021
(51) Int. Cl.: B65G 65/00, B65G 47/52

(54) **SYSTEME DE TRANSFERT D ARTICLES**
TRANSFERSYSTEM FÜR ARTIKEL
SYSTEM FOR TRANSFERRING ITEMS

(30) Priorité: 21.12.2020 FR 2013825
(43) Date de publication de la demande: 22.06.2022
(73) Titulaire: FIVES SYLEPS, 56100 Lorient (FR)
(72) Inventeur: Le CORRE, Yves, 56100 LORIENT (FR)
(74) Mandataire: Novagraaf Group

(56) Documents cités:
- EP-A1- 0 496 992
- EP-A1- 0 583 859
- WO-A2-2006/125128
- FR-A1- 3 032 441

## Description

### Domaine technique de l'invention

La présente invention concerne le domaine du tri d'articles tels que du courrier ou des colis. L'invention concerne en particulier un système de transfert permettant d'extraire automatiquement des charges de forme quelconque à partir d'un plateau sur lequel elles ont été placées au préalable.

### Etat de la technique

Il est connu de stocker des charges sur des plateaux avant réarrangement de celles-ci sur une palette pour un transfert vers un lieu de distribution, comme une grande surface par exemple.

Le stockage sur des plateaux facilite leur transport sur un système de convoyage, leur rangement dans un rayonnage ainsi que leur reprise pour un traitement ultérieur.

Ce type de stockage présente cependant un inconvénient, à savoir celui du déchargement automatique et à grande vitesse des plateaux.

On connaît par exemple le document FR 2 567 425, qui divulgue un système utilisé dans le domaine du tri postal mettant en oeuvre des plateaux, chaque plateau étant muni d'une raclette susceptible de se déplacer sur la surface du plateau, pour pousser les colis vers un support de transport. Cette solution est mécaniquement compliquée et ne permet pas un transfert sans risque des colis.

Le document WO 2006/125128 A2 divulgue un système de transfert d'articles comprenant un premier convoyeur agencé pour transporter un plateau portant un article jusqu'à une zone de transfert, selon une première direction, la zone de transfert dans laquelle l'article est séparé du plateau, ladite zone de transfert étant adjacente au premier convoyeur, et un deuxième convoyeur présentant une portion adjacente à ladite zone de transfert, ledit deuxième convoyeur étant agencé pour recevoir l'article dans ladite portion. La zone de transfert comprenant un troisième convoyeur agencé pour recevoir le plateau portant l'article, et un pousseur mobile configuré pour pousser l'article porté par le troisième convoyeur vers la portion du deuxième convoyeur.

On connaît aussi des systèmes mettant en oeuvre des plateaux à trous au travers desquels on vient repousser les colis dans une position d'extraction. De tels systèmes ne permettent pas un transfert sans risque de colis de forme irrégulière et/ou présentant une forme instable tels que des colis à fond souple.

Par exemple, un objet dans une enveloppe à bulles ne peut être transféré sans risque avec les systèmes connus. En effet, un problème récurrent dans ces systèmes est que lors du transfert de l'article à partir du plateau, une partie de l'enveloppe à bulles se retrouve coincé entre le moyen pousseur et le plateau ce qui peut résulter en un dommage sur l'article ou un blocage des moyens de transfert.

L'objectif de l'invention est donc de proposer un système de transfert d'articles, permettant un transfert sécurisé d'articles transportés sur des plateaux, qu'ils soient de forme régulière ou irrégulière, pouvant avoir un fond non nécessairement plan et/ou déformable, en particulier des articles à fond souple.

### Résumé de l'invention

A cet effet, l'invention concerne un système de transfert d'articles comprenant :
∘ un premier convoyeur agencé pour transporter un plateau portant un article jusqu'à une zone de transfert, selon une première direction,
∘ la zone de transfert dans laquelle l'article est séparé du plateau, ladite zone de transfert étant adjacente du premier convoyeur,
∘ un deuxième convoyeur présentant une portion adjacente de ladite zone de transfert, ledit deuxième convoyeur étant agencée pour recevoir l'article dans ladite portion,
la zone de transfert comprenant :
- Un troisième convoyeur agencé pour recevoir le plateau portant l'article, ledit troisième convoyeur étant mobile entre une position haute, de réception du plateau, située sensiblement à la même hauteur que ladite portion du deuxième convoyeur, et une position plus basse, d'évacuation du plateau vide,
- Un moyen porteur rétractable, configuré pour être inséré entre le plateau et l'article, lorsque le plateau est sur le troisième convoyeur, et pour porter l'article lorsque le troisième convoyeur et le plateau passent de la position haute à la position basse,
- Un pousseur mobile suivant une deuxième direction orthogonale à la première et configuré pour pousser l'article porté par le moyen porteur vers la portion du deuxième convoyeur.

Avec le système selon l'invention, lorsqu'un plateau arrive à la zone de transfert, le moyen porteur est déplacé pour être inséré entre le plateau et l'article. Ainsi, en passant le troisième convoyeur de la position haute à la position basse, le plateau vide descend avec le convoyeur alors que l'article reste porté par le moyen porteur. Ensuite, le déplacement du pousseur, permet de transférer l'article porté par le moyen porteur vers le deuxième convoyeur. Lors de ce transfert, comme l'article est simplement poussé du moyen porteur, ce transfert est fait sans risque de l'endommager, en particulier si l'article est instable et/ou de forme irrégulière, par exemple un colis à fond souple.

Avantageusement, le moyen porteur peut être une fourche mobile suivant la deuxième direction, ladite fourche étant portée par un dispositif de transfert adjacent au troisième convoyeur et en regard de ladite portion du deuxième convoyeur. Une fourche présente l'avantage de pouvoir être facilement insérée entre le plateau et le l'article et en même temps de présenter une solidité pour supporter le poids d'un article et sa stabilité. Ceci permet donc de sécuriser le transfert de l'article.

Avantageusement, le pousseur peut être porté par le dispositif de transfert.

Avantageusement, le pousseur peut comprendre au moins une ouverture au travers de laquelle passent les dents de la fourche. Ceci permet de simplifier la conception tout en garantissant un transfert sans risque.

Avantageusement, la zone de transfert peut comprendre un moyen d'arrêt permettant d'arrêter le plateau dans une position de transfert. Ceci permet de bien positionner le plateau par rapport au dispositif de transfert. Le moyen d'arrêt est par exemple une butée mécanique.

Avantageusement, le système peut en outre comprendre un quatrième convoyeur communiquant avec le troisième convoyeur, lorsqu'il est dans la position basse, pour transporter le plateau vide hors de la zone de transfert.

Selon un deuxième aspect, l'invention porte sur un système de transport comprenant :
- Un système de transfert selon l'une des variantes décrites précédemment, et
- Un plateau pour transporter un article jusqu'à la zone de transfert, ledit plateau comprenant au moins une ouverture latérale configurée pour permettre un passage du moyen porteur entre ledit plateau et l'article, ladite au moins une ouverture autorise un passage du plateau de la position haute à la position basse avec le troisième convoyeur.

### Brève description des figures

D'autres particularités et avantages de l'invention apparaîtront dans la description ci-après en relation avec les dessins annexés, donnés à titre d'exemples non limitatifs, dans lesquelles :
[Fig.1] la figure 1 représente un exemple de système de transfert selon l'invention ;
[Fig.2] la figure 2 est un zoom sur la zone de transfert de la figure 1;
[Fig.3] la figure 3 montre un exemple de plateau selon l'invention portant un article à transférer ;
[Fig.4] la figure 4 montre des étapes de transfert d'un article ;
[Fig.5] la figure 5 montre les étapes de transfert de la figure 4 vues de face ;
[Fig.6] la figure 6 représente une variante de système de transfert selon l'invention ;
[Fig.7] la figure 7 représente une autre variante de système de transfert selon l'invention.

Dans la suite de la description, des éléments présentant une structure identique ou des fonctions analogues seront désignés par les mêmes références.

### Description détaillée

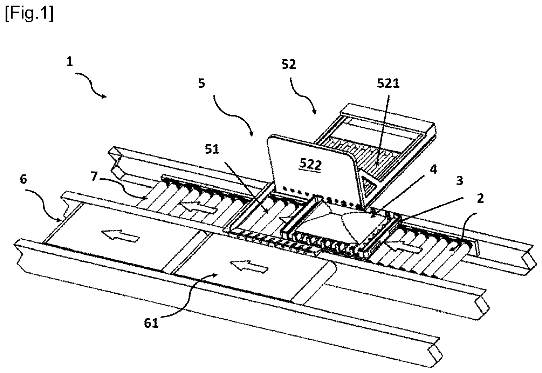

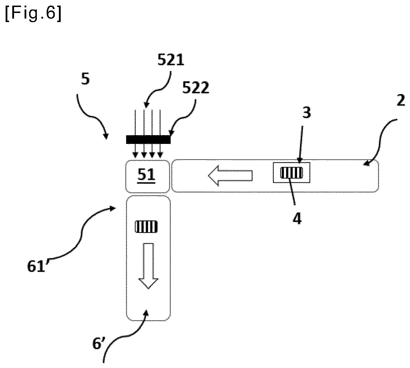

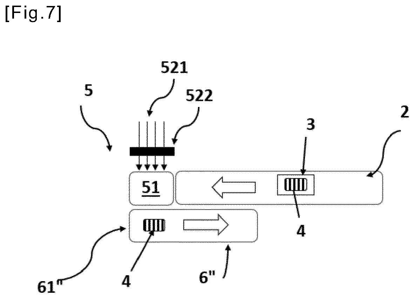

La figure 1 représente schématiquement un premier exemple de système 1 de transfert d'articles selon l'invention. Le système 1 comprenant:
∘ un premier convoyeur 2 agencé pour transporter un plateau 3 portant un article jusqu'à une zone de transfert 5, selon une première direction telle que montré par la flèche. Le convoyeur 2 peut par exemple être à rouleaux ou à bande.
∘ ladite zone 5 de transfert est adjacente au premier convoyeur 2 dans le sens du déplacement de l'article 4.
∘ un deuxième convoyeur 6 qui présente une portion 61 adjacente à ladite zone 5 de transfert, le deuxième convoyeur étant agencé pour recevoir l'article 4 dans la portion 61, et le transporter ensuite soit dans la même direction que le premier convoyeur, soit dans une autre direction. Dans les variantes de réalisation des figures 6 et 7 par exemple, les convoyeurs 6' et 6" ont des directions de transport qui sont respectivement orthogonale et opposée à la direction de transport du premier convoyeur 2.

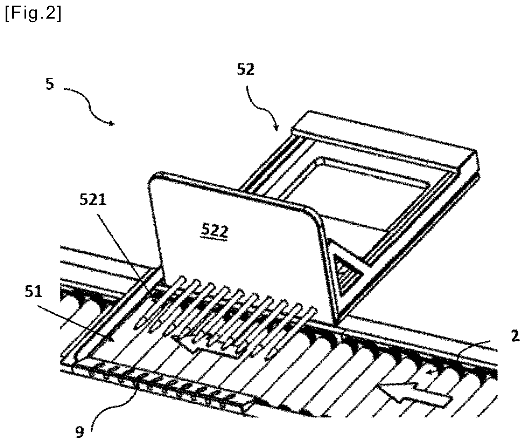

La figure 2 montre un zoom sur la zone de transfert 5. Cette zone de transfert 5 comprend un convoyeur 51 (appelé troisième convoyeur dans cette description) qui est dans la continuité du convoyeur 2 à rouleaux, dans l'exemple illustré. Dans d'autres exemples non illustrés, le troisième convoyeur peut être différent, par exemple, il peut être un convoyeur à bande.

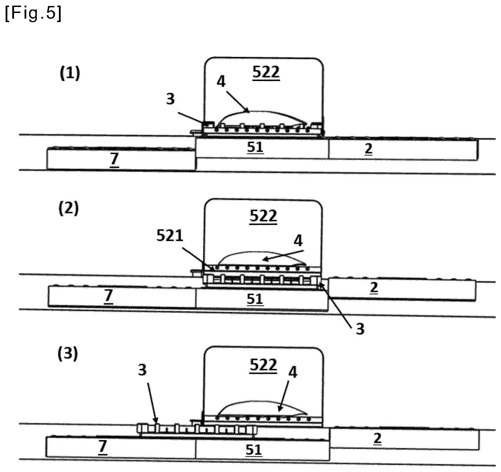

Comme cela est montré par la figure 5, le troisième convoyeur 51 est mobile entre une position haute, de réception du plateau, et une position plus basse, d'évacuation du plateau vide.

La zone de transfert comprend également un dispositif de transfert 52, qui comprend :
- Un moyen porteur rétractable, par exemple une fourche 521 configuré pour être insérée entre le plateau 3 et l'article 4, lorsque le plateau est sur le troisième convoyeur 51, et pour porter l'article lorsque le troisième convoyeur 51 et le plateau 3 passent de la position haute à la position basse,
- Un pousseur 522, mobile suivant la direction orthogonale à la direction du premier et configuré pour pousser l'article porté par le moyen porteur 521 vers la portion 61 du deuxième convoyeur, qui est adjacente à la zone de transfert.

Avantageusement, l'élément 9 fixé entre le deuxième et le troisième convoyeurs permet aux extrémités des dents de la fourche 521 d'être posées de façon sécurisée avant le transfert. Par ailleurs, la forme inclinée de l'élément 9 permet de sécuriser davantage le transfert de l'article 4. En particulier, un avantage de l'élément 9 est d'éviter qu'un article de forme irrégulière, telle qu'une enveloppe a bulles se trouve coincée par une extrémité lors du transfert.

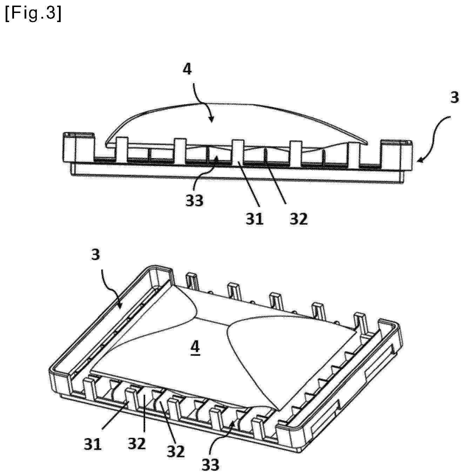

La figure 3 montre un plateau 3 portant un article 4 à transférer avec le système de transfert selon l'invention, en particulier le plateau 3 permet de transporter l'article 4 jusqu'à la zone 5 de transfert.

Pour permettre le transfert de l'article 4, le plateau 3 comprend une ou plusieurs ouvertures latérales configurée(s) pour permettre un passage du moyen porteur 521 entre le plateau et l'article, ladite/lesdites ouvertures autorisent un passage du plateau 4 de la position haute à la position basse avec le troisième convoyeur 51.

En particulier, selon l'exemple illustré, le plateau 3 comprend une pluralité d'ouvertures 33 configurées pour permettre le passage des dents de la fourche 521. Le plateau peut en outre comprendre des éléments 31, 32 sur lesquels l'article 4 est posé, les ouvertures 33 étant formées entre ces éléments 31, 32.

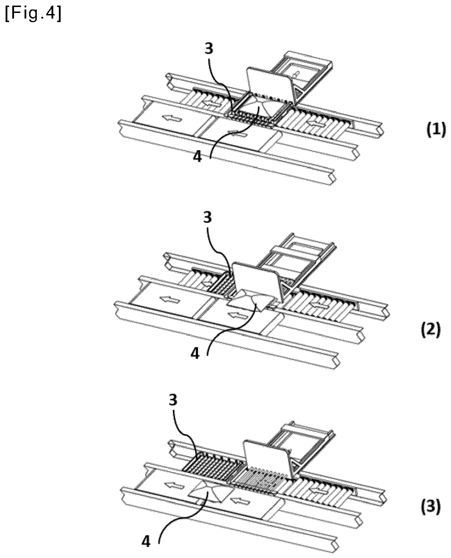

La figure 4 et la figure 5 montrent les étapes de transfert de l'article 4 à partir du plateau 3 en utilisant le système de transfert de l'invention.

**Eta e (1)** : le plateau 3 portant l'article 4 est transporté par le convoyeur 2 jusqu'à la zone de transfert 5 et est positionné sur le convoyeur 51. Avantageusement, un moyen d'arrêt permet de le positionner correctement par rapport au dispositif 52 de transfert. Dans cette position, la fourche 521 est déplacée de sorte que ses dents passent dans les ouvertures 33 du plateau 3. Comme cela se voit sur la figure 5, le convoyeur 51 est dans la position haute.

**Etape (2)** : le convoyeur 51 passe de la position haute à la position basse, comme le montre la figure 5. Le plateau 3 passe également à la position basse, alors que l'article 4 reste porté par la fourche 521. Ensuite, le pousseur 522 est déplacé de sorte à pousser l'article 4 de la fourche 521 vers la portion 61 du convoyeur 6.

**Etape (3)** : l'article 4 est transporté par le convoyeur 6, et le plateau vide passe du troisième convoyeur 51 vers le quatrième convoyeur 7 pour être transporté hors de la zone de transfert 5.

## Revendications

1. Système (1) de transfert d'articles (4) comprenant :
∘ un premier convoyeur (2) agencé pour transporter un plateau (3) portant un article (4) jusqu'à une zone (5) de transfert, selon une première direction,
∘ la zone (5) de transfert dans laquelle l'article (4) est séparé du plateau (3), ladite zone de transfert (5) étant adjacente au premier convoyeur (2),
∘ un deuxième convoyeur (6 ; 6' ; 6") présentant une portion (61 ; 61' ; 61") adjacente à ladite zone de transfert (5), ledit deuxième convoyeur (6) étant agencé pour recevoir l'article (4) dans ladite portion (61 ; 61' ; 61"),
la zone de transfert (5) comprenant :
- Un troisième convoyeur (51) agencé pour recevoir le plateau (3) portant l'article (4), ledit troisième convoyeur étant mobile entre une position haute de réception du plateau (3) située sensiblement à la même hauteur que ladite portion (61 ; 61' ; 61") du deuxième convoyeur (6) et une position plus basse d'évacuation du plateau (3),
- Un moyen porteur (521) rétractable, configuré pour être inséré entre le plateau (3) et l'article (4), lorsque le plateau (3) est sur le troisième convoyeur (51), et pour porter l'article (4) lorsque le troisième convoyeur (51) et le plateau (3) passent de la position haute à la position basse,
- Un pousseur (522) mobile suivant une deuxième direction orthogonale à la première et configuré pour pousser l'article (4) porté par le moyen porteur (521) vers la portion (61) du deuxième convoyeur (6).

2. Système selon la revendication 1, dans lequel le moyen porteur (521) est une fourche présentant une pluralité de dents et est mobile suivant la deuxième direction, ladite fourche (521) étant portée par un dispositif de transfert (52) adjacent au troisième convoyeur (51) et en regard de ladite portion (61) du deuxième convoyeur (6).

3. Système selon la revendication 2, dans lequel le pousseur (522) est également porté par le dispositif de transfert (52).

4. Système (1) selon l'une des revendication 2 ou 3, dans lequel le pousseur (522) comprend au moins une ouverture au travers de laquelle passent les dents de la fourche.

5. Système (1) selon l'une des revendications précédentes, dans lequel la zone de transfert comprend un moyen d'arrêt permettant d'arrêter le plateau (3) sur le troisième convoyeur (51) dans la position de transfert.

6. Système (1) selon l'une des revendications précédentes, comprenant en outre un quatrième convoyeur (7) communiquant avec le troisième convoyeur (51), lorsqu'il est dans la position basse, pour transporter le plateau (3) vide hors de la zone de transfert (5).

7. Système de transport d'articles (4), comprenant :
- Un système de transfert selon l'une des revendications précédentes, et
- Un plateau (3) pour transporter un article (4) jusqu'à la zone (5) de transfert, ledit plateau comprenant au moins une ouverture latérale (33) configurée pour permettre un passage du moyen porteur (521) entre ledit plateau et l'article, ladite au moins une ouverture autorise un passage du plateau (4) de la position haute à la position basse avec le troisième convoyeur (51).

## Patentansprüche

1. System (1) zum Übertragen von Gegenständen (4), umfassend:
o einen ersten Förderer (2), der angeordnet ist, um eine Schale (3), die einen Gegenstand (4) trägt, zu einem Übertragungsbereich (5) gemäß einer ersten Richtung zu transportieren,
o den Übertragungsbereich (5), in dem der Gegenstand (4) von der Schale (3) getrennt ist, wobei der Übertragungsbereich (5) an den ersten Förderer (2) angrenzt,
o einen zweiten Förderer (6; 6', 6"), der einen Abschnitt (61; 61'; 61") angrenzend an den Übertragungsbereich (5) aufweist, wobei der zweite Förderer (6) angeordnet ist, um den Gegenstand (4) in den Abschnitt (61; 61'; 61") aufzunehmen,
der Übertragungsbereich (5) umfassend:
- einen dritten Förderer (51), der angeordnet ist, um die Schale (3) aufzunehmen, die den Gegenstand (4) trägt, wobei der dritte Förderer zwischen einer oberen Aufnahmeposition der Schale (3), die im Wesentlichen auf der gleichen Höhe wie der Abschnitt (61; 61'; 61") des zweiten Förderers (6) liegt, und einer unteren Abgabeposition der Schale (3) bewegbar ist,
- ein einziehbares Trägermittel (521), das konfiguriert ist, um zwischen der Schale (3) und dem Gegenstand (4) eingesetzt zu werden, wenn sich die Schale (3) auf dem dritten Förderer (51) befindet, und um den Gegenstand (4) zu tragen, wenn der dritte Förderer (51) und die Schale (3) von der oberen Position in die untere Position passieren,
- einen Schieber (522), der einer zweiten Richtung orthogonal zu der ersten folgend bewegbar und konfiguriert ist, um den Gegenstand (4) zu schieben, der durch das Trägermittel (521) zu dem Abschnitt (61) des zweiten Förderers (6) getragen wird.

2. System nach Anspruch 1, wobei das Trägermittel (521) ein Gabelmitnehmer ist, der eine Vielzahl von Zähnen aufweist und der zweiten Richtung folgend bewegbar ist, wobei der Gabelmitnehmer (521) durch eine Übertragungsvorrichtung (52) angrenzend an den dritten Förderer (51) und gegenüber dem Abschnitt (61) des zweiten Förderers (6) getragen wird.

3. System nach Anspruch 2, wobei der Schieber (522) auch durch die Übertragungsvorrichtung (52) getragen wird.

4. System (1) nach einem der Ansprüche 2 oder 3, wobei der Schieber (522) mindestens eine Öffnung umfasst, durch die die Zähne des Gabelmitnehmers passieren.

5. System (1) nach einem der vorstehenden Ansprüche, wobei der Übertragungsbereich ein Stoppmittel umfasst, das es ermöglicht, die Schale (3) auf dem dritten Förderer (51) in der Übertragungsposition zu stoppen.

6. System (1) nach einem der vorstehenden Ansprüche, ferner umfassend einen vierten Förderer (7), der mit dem dritten Förderer (51) in Verbindung steht, wenn er sich in der unteren Position befindet, um die leere Schale (3) aus dem Übertragungsbereich (5) zu transportieren.

7. System zum Transportieren von Gegenständen (4), umfassend:
- ein Übertragungssystem nach einem der vorstehenden Ansprüche und
- eine Schale (3) zum Transportieren eines Gegenstands (4) bis zu dem Übertragungsbereich (5), die Schale umfassend mindestens eine Seitenöffnung (33), die konfiguriert ist, um ein Passieren des Trägermittels (521) zwischen der Schale und dem Gegenstand zu ermöglichen, wobei die mindestens eine Öffnung ein Passieren der Schale (4) von der oberen Position in die untere Position mit dem dritten Förderer (51) erlaubt.

## Claims

1. System (1) for transferring items (4) comprising:
∘ a first conveyor (2) arranged to transport a tray (3) carrying an item (4) to a transfer area (5), in a first direction,
∘ the transfer area (5) in which the item (4) is separated from the tray (3), said transfer area (5) being adjacent to the first conveyor (2),
∘ a second conveyor (6; 6'; 6") having a portion (61; 61'; 61") adjacent to said transfer area (5), said second conveyor (6) being arranged to receive the item (4) in said portion (61; 61'; 61"),
the transfer area (5) comprising:
- a third conveyor (51) arranged to receive the tray (3) carrying the item (4), said third conveyor being movable between a high position for receiving the tray (3) located substantially at the same height as said portion (61; 61'; 61") of the second conveyor (6) and a lower position for discharging the tray (3),
- a retractable carrier means (521), which is configured to be inserted between the tray (3) and the item (4) when the tray (3) is on the third conveyor (51), and to carry the item (4) when the third conveyor (51) and the tray (3) pass from the high position to the low position,
- a pusher (522) which is movable in a second direction orthogonal to the first direction and configured to push the item (4) carried by the carrier means (521) toward the portion (61) of the second conveyor (6).

2. System according to claim 1, wherein the carrier means (521) is a fork which has a plurality of teeth and is movable in the second direction, said fork (521) being carried by a transfer device (52) adjacent to the third conveyor (51) and opposite said portion (61) of the second conveyor (6).

3. System according to claim 2, wherein the pusher (522) is also carried by the transfer device (52).

4. System (1) according to one of claims 2 or 3, wherein the pusher (522) comprises at least one opening through which the teeth of the fork pass.

5. System (1) according to any of the preceding claims, wherein the transfer area comprises a stop means for stopping the tray (3) on the third conveyor (51) in the transfer position.

6. System (1) according to any of the preceding claims, further comprising a fourth conveyor (7) which communicates with the third conveyor (51), when it is in the low position, to transport the empty tray (3) outside the transfer area (5).

7. Item transport system (4), comprising:
- a transfer system according to any of the preceding claims, and
- a tray (3) for transporting an item (4) to the transfer area (5), said tray comprising at least one side opening (33) which is configured to allow the carrier means (521) to pass between said tray and the item, said at least one opening allows the tray (4) to pass from the high position to the low position with the third conveyor (51).
